# EUROPEAN PATENT APPLICATION

(11) **EP 4 699 951 A1**
(43) Date of publication of application: **25.02.2026**
(21) Application number: 25191692.0
(22) Date of filing: 24.07.2025
(51) Int. Cl.: B65D 39/08, B65D 51/24, B65D 51/28, B65D 51/18, A47J 41/00

(54) **CAP UNIT AND CAPPED CONTAINER**

(30) Priority: 20.08.2024 JP 2024138423
(71) Applicant: Thermos L.L.C., Schaumburg, IL 60173 (US); Thermos K.K., Tsubame-shi, Niigata-ken (JP)
(72) Inventor: KASHIMA, Ko, Niigata-ken (JP); MURATA, Takeshi, Niigata-ken (JP)
(74) Representative: Barker Brettell LLP

(57) **Abstract**

A cap unit (1A) that can be freely attached and detached from a container main body (2) that is open at an upper part, and includes a cap main body (9) that closes an upper opening part (2a) of the container main body (2), the cap main body (9) having an outer lid (10) that covers the upper opening part (2a) of the container main body (2), an inner plug (11) that fits into the inside of the container main body (2) from the upper opening part (2a), and a temporary fastening mechanism (20A) that temporarily fastens the inner plug (11) to the inner lower surface of the outer plug (10); wherein the inner plug (11) is integrally joined to the inner lower surface of the outer lid (10) while the inner plug (11) is temporarily fastened such that the temporary fastening mechanism (20A) prevents the inner plug (11) from falling from the outer lid (10).

## Description

### TECHINICAL FIELD

The present invention relates to a cap unit and a capped container.

### CONVENTIONAL TECHNOLOGY

Conventionally, there have been capped containers equipped with a cap unit (plug body) that is freely attached and detached from a container main body having an open upper part to open and close the upper opening part of the container main body (see, for example, Patent Documents 1 and 2 listed below).

Such a cap unit has an outer lid that covers the upper opening part of the container main body and an inner plug that is fitted into the inside of the container main body from the upper opening part, and is structured so that the inner plug or the outer lid is attached to the container main body by screwing.

### RELATED ART DOCUMENTS

Patent Document 1: Japanese Patent 5929510
Patent Document 2: Japanese Unexamined Patent Application Publication 2002-37351

### SUMMARY OF THE INVENTION

### PROBLEM TO BE SOLVED BY THE INVENTION

In the aforementioned conventional cap unit, the inner plug is joined to the inner lower surface of the outer lid by ultrasonic welding, high-frequency welding or the like, and is attached integrally.

However, with such a configuration, for example, if there is a problem with the joint, it is necessary to consider the possibility that stress will be applied to the joint surface between the inner lower surface of the outer lid and the inner plug during repeated attachment and detachment of the cap unit to the container main body, causing the inner plug to separate from the inner lower surface of the outer lid.

Furthermore, if the inner plug is separated from the inner lower surface of the outer lid, the inner plug will fall from the inner lower surface of the outer lid, so a countermeasure is needed to provide a product that is safer to use.

The present invention has been proposed in consideration of the aforementioned conventional circumstances, and an object is to provide a cap unit that can prevent the inner plug from falling from the inner lower surface of the outer lid even if the inner plug separates from the inner lower surface of the outer lid, and a capped container that is safer and more user-friendly by being equipped with such a cap unit.

### MEANS FOR SOLVING THE PROBLEM

In order to achieve the above objectives, the present invention provides the following means.
[1] A cap unit freely attached and detached from a container main body open on an upper part, containing: a cap main body that closes an upper opening part of the container main body, the cap main body having an outer lid that covers the upper opening part of the container main body, an inner plug that fits into the inside of the container main body from the upper opening part, and a temporary fastening mechanism that prevents the inner plug from falling by temporarily fastening the inner plug to an inner lower surface of the outer lid; wherein the inner plug is integrally joined to the inner lower surface of the outer lid while the inner plug is temporarily fastened to the outer lid by the temporary fastening mechanism.
[2] The cap unit according to the aforementioned [1], wherein the temporary fastening mechanism has an engaging part provided on one of the outer lid or the inner plug, and an engaged part provided on the other, and the engaging part engages with the engaged part, thereby temporarily fastening the inner plug to the inner lower surface of the outer lid.
[3] The cap unit according to the aforementioned [2], wherein a positional relationship between the engaged part and the engaging part when the engaging part is engaged with the engaged part is such that a gap is provided to allow the inner plug to move in a direction for joining to the inner lower surface of the outer lid.
[4] The cap unit according to the aforementioned [2], wherein the temporary fastening mechanism is in a condition where the engaging part engages with the engaged part by rotating the inner plug about an axis relative to the inner lower surface of the outer lid.
[5] A capped container, including: the cap unit according to any one of the aforementioned [1] to [4], and a container main body to which the cap unit is attached.

### EFFECT OF THE INVENTION

As described above, the present invention provides a cap unit that can prevent the inner plug from falling from the inner lower surface of the outer lid even if the inner plug separates from the inner lower surface of the outer lid, and a capped container that is equipped with such a cap unit, which enables safer and easier use.

### BRIEF DESCRIPTION OF THE DRAWINGS

FIG. 1 is a perspective view depicting an exterior appearance of a capped container provided with a cap unit according to Embodiment 1 of the present invention;
FIG. 2 is a cross-sectional view of the capped container taken along line A-A depicted in FIG. 1;
FIG. 3 is a cross-sectional view of the capped container taken along line B-B depicted in FIG. 1;
FIG. 4 is a perspective view of an outer lid constituting the cap unit depicted in FIG. 1, as seen from below;
FIG. 5 is a perspective view of an inner plug constituting the cap unit depicted in FIG. 1, as seen from above;
FIG. 6 is a perspective view of the inner plug depicted in FIG. 5, as viewed from below;
FIG. 7(a) is a cross-sectional view depicting a state in which an inner plug is being temporarily fastened to the outer lid of the cap unit depicted in FIG. 2, and FIG. 7(b) is a perspective view of the same cross-section;
FIG. 8(a) is a cross-sectional view depicting a state in which an inner plug has been temporarily fastened to the outer lid of the cap unit depicted in FIG. 2, and FIG. 8(b) is a perspective view of the same cross-section;
FIG. 9(a) is a cross-sectional view depicting a state in which an inner plug is joined while the inner plug is temporarily fastened to the outer lid of the cap unit depicted in FIG. 2, and FIG. 9(b) is a perspective view of the same cross-section;
FIG. 10 is a cross-sectional view depicting a state in which an inner plug is joined to an outer lid of the cap unit depicted in FIG. 3;
FIG. 11 is a cross-sectional view of a cap unit according to embodiment 2 of the present invention, as taken along line A-A in FIG. 1;
FIG. 12 is a cross-sectional view of the cap unit depicted in FIG. 11, as taken along line B-B in FIG. 1;
FIG. 13 is a cross-sectional view of a cap unit according to embodiment 3 of the present invention, as taken along line A-A in FIG. 1; and
FIG. 14 is a cross-sectional view of the cap unit depicted in FIG. 13, as taken along line B-B in FIG. 1.

### DESCRIPTION OF THE PREFERRED EMBODIMENTS

The following is a detailed description of the embodiment of the present invention with reference to the drawings.

### Embodiment 1

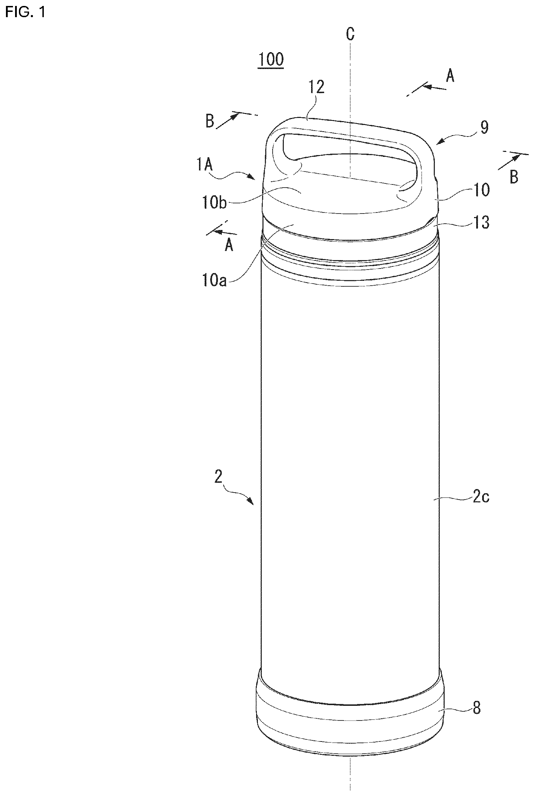

First, a capped container 100 provided with a cap unit 1A as depicted in FIG. 1 to FIG. 10 will be described as Embodiment 1 of the present invention.

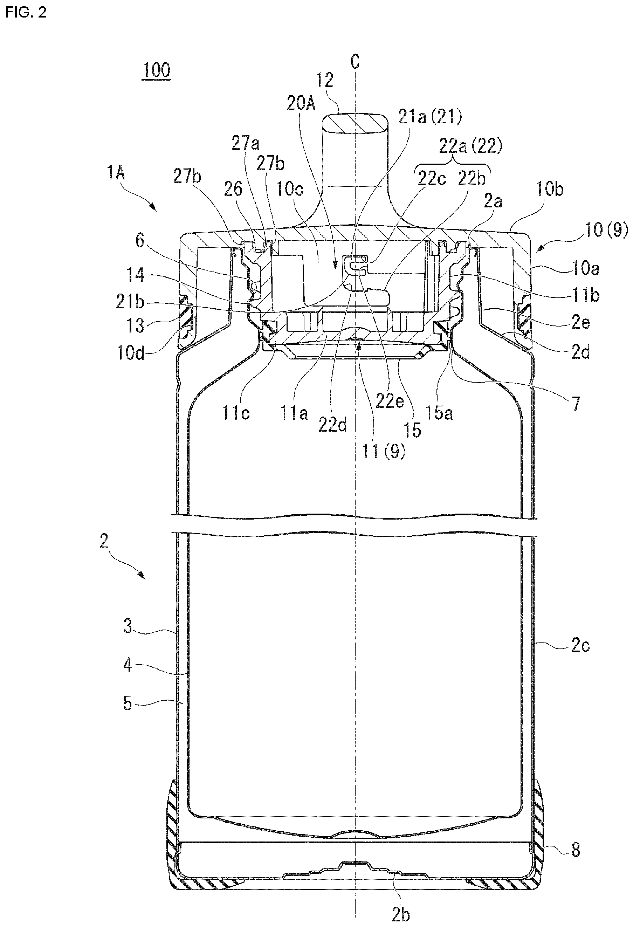

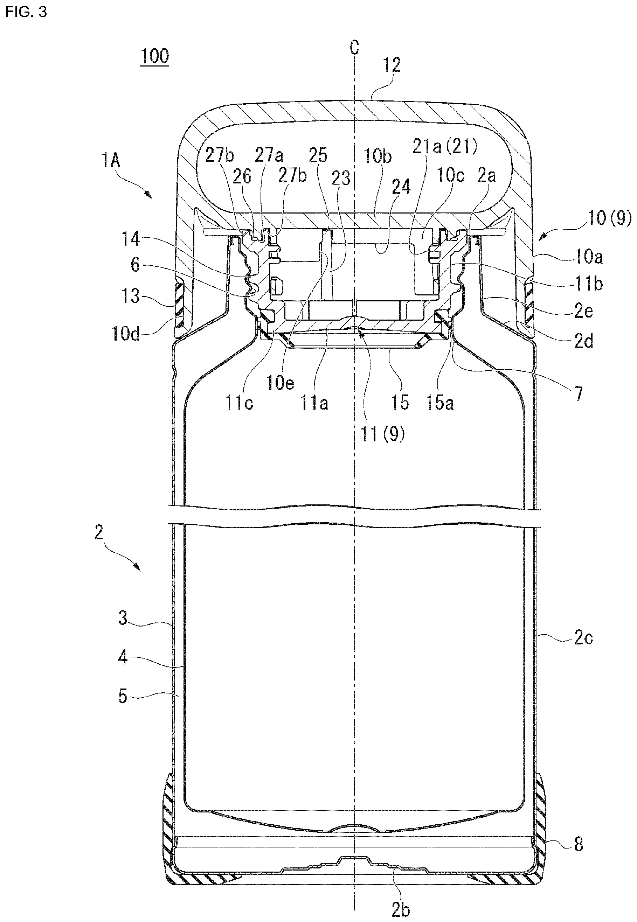

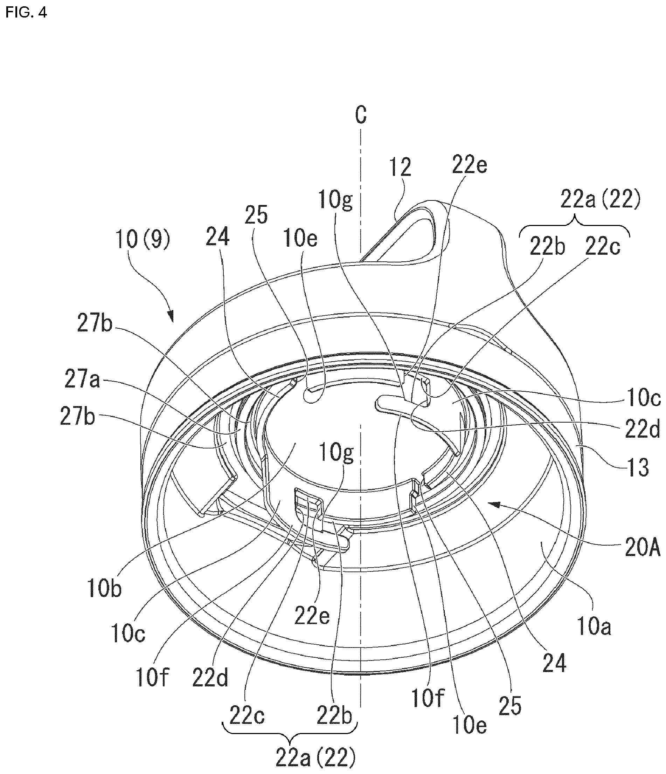

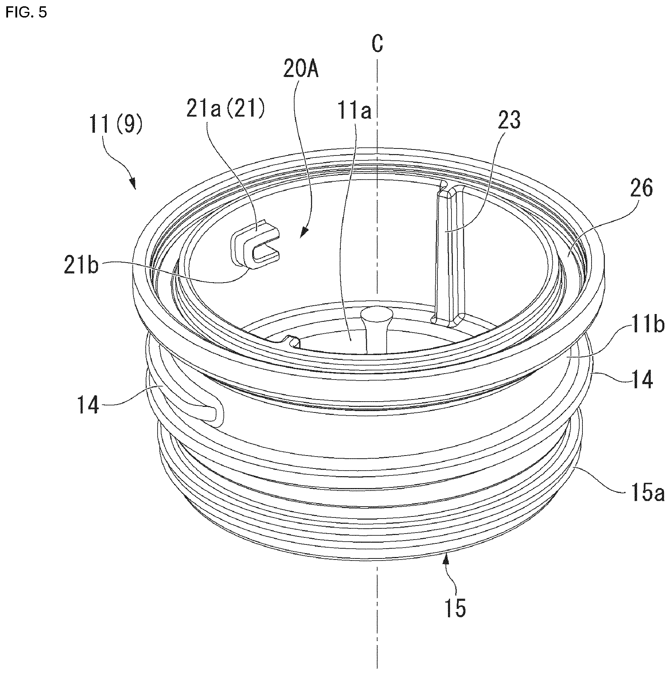

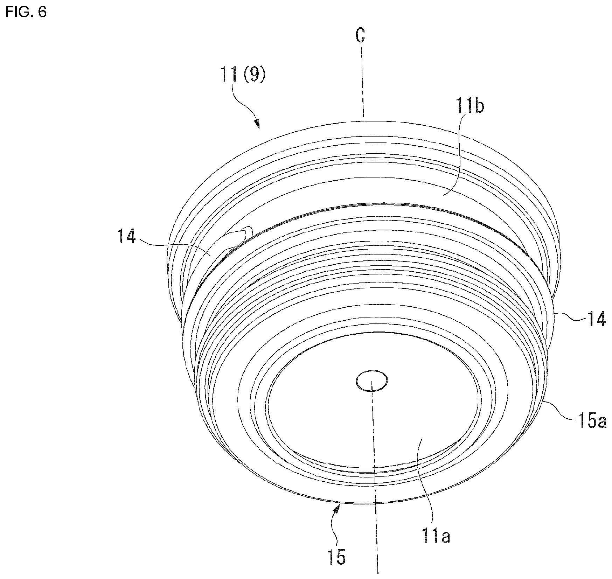

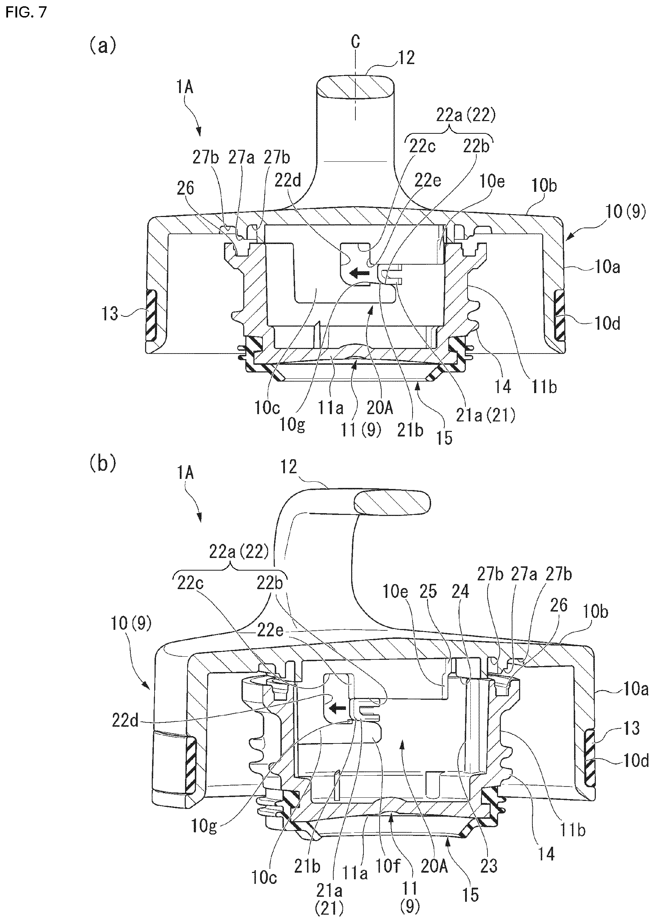

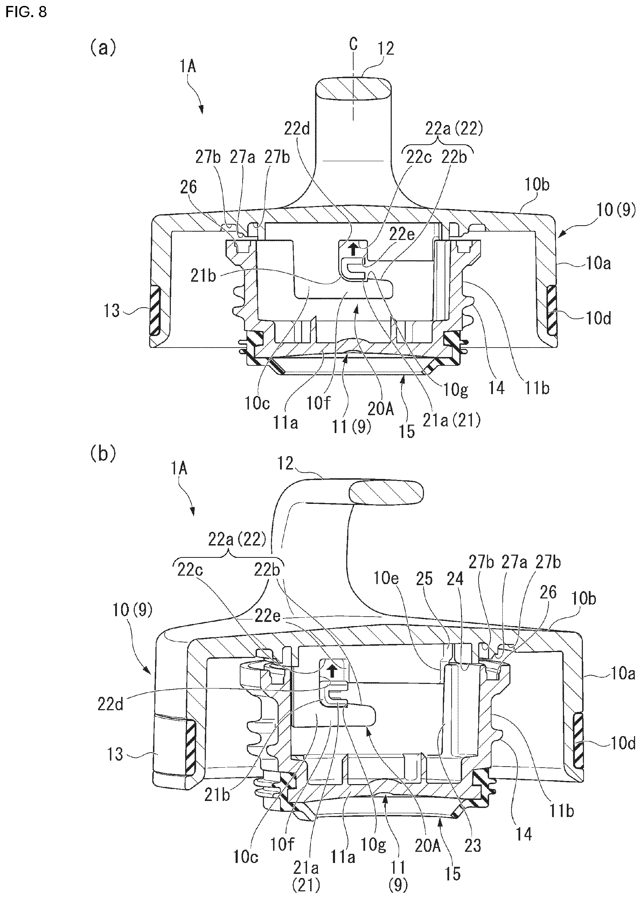

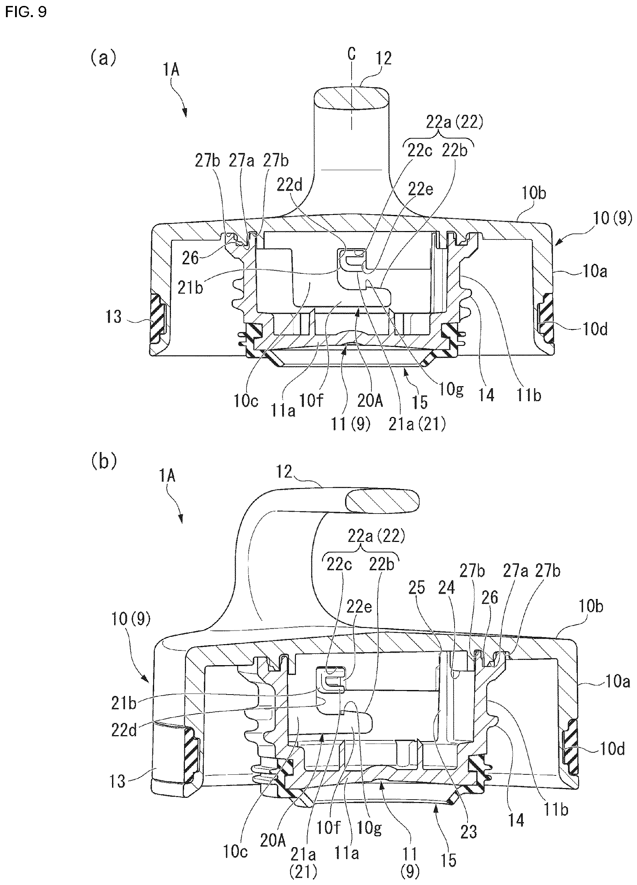

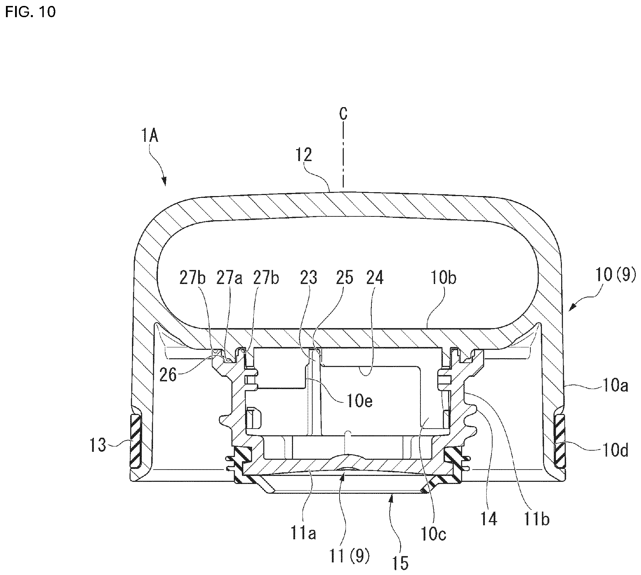

Note that FIG. 1 is a perspective view depicting the external appearance of the capped container 100 provided with the cap unit 1A FIG. 2 is a cross-sectional view of the capped container 100 taken along line A-A depicted in FIG. 1. FIG. 3 is a cross-sectional view of the capped container 100 taken along line B-B depicted in FIG. 1. FIG. 4 is a perspective view of an outer lid 10 constituting the cap unit 1A as seen from below. FIG. 5 is a perspective view of an inner plug 11 constituting the cap unit 1A, as seen from above. FIG. 6 is a perspective view of the inner plug 11, as viewed from below. FIG. 7(a) is a cross-sectional view depicting a state in which an inner plug 11 is being temporarily fastened to the outer lid 10 of the cap unit 1A. FIG. 7(b) is a perspective view of the same cross-section. FIG. 8(a) is a cross-sectional view depicting a state in which an inner plug 11 has been temporarily fastened to the outer lid 10 of the cap unit 1A. FIG. 8(b) is a perspective view of the same cross-section. FIG. 9(a) is a cross-sectional view depicting a state in which an inner plug is joined while the inner plug 11 is temporarily fastened to the outer lid 10 of the cap unit 1A, and FIG. 9(b) is a perspective view of the same cross-section. FIG. 10 is a cross-sectional view depicting a state in which an inner plug 11 is joined to an outer lid 10 of the cap unit 1A.

As depicted in FIG. 1, FIG. 2, and FIG. 3, the capped container 100 of the present embodiment has a cap unit 1A of the present embodiment and a container main body 2 to which the cap unit 1A is detachably attached.

The capped container 100 is a beverage container that can keep beverages (liquids) contained in the container main body 2 cool or warm by means of the container main body 2 having a vacuum insulation structure. Furthermore, in the capped container 100, the upper opening part 2a of the container main body 2 can be opened and closed by the cap unit 1A which is attached to the container main body 2 by screwing.

Note that the direction in which the center axis C extends is the vertical direction, and the direction perpendicular to the center axis C is called the radial direction or the horizontal direction. In the radial directions, the direction toward the center axis C is referred to as the radial inner side or simply the inner side, and the direction away from the center axis C is referred to as the radial outer side or simply the outer side. Furthermore, the direction of rotation around the center axis C is called the rotational direction or the circumferential direction.

Specifically, the container main body 2 is configured as a double structure having a cylindrical outer container with an outer container 3 and an inner container 4 made of, for example, stainless steel, that are mutually joined at a periphery of the opening part in a state where the inner container 4 is stored inside the outer container 3.
Furthermore, a vacuum insulating layer 5 is provided between the outer container 3 and the inner container 4. The vacuum insulating layer 5 can be formed, for example, by plugging the degassing hole on the bottom of the outer container 3 in a chamber that has been depressurized (evacuated) to a high vacuum.

The container main body 2 has a substantially circular bottom part 2b, a trunk part 2c that stands up in a substantially cylindrical shape from the outer periphery of the bottom part 2b, a shoulder part 2d that gradually reduces in diameter at the upper part side of the trunk part 2c, and an opening neck part 2e that stands up in a substantially cylindrical shape from the shoulder part 2d. The upper end part of the opening neck part 2e opens in a circular shape as the upper opening part 2a of the container main body 2.

The inner peripheral surface of the opening neck part 2e (upper part side of the trunk part 2c) is smaller in diameter than the inner peripheral surface of the trunk part 2c. Furthermore, a female screw part 6 is provided on the inner peripheral surface of the opening neck part 2e. Furthermore, a ring-shaped protruding part 7 is provided so as to protrude from the inner peripheral surface of the inner container 4 over the entire circumference below the female threaded part 6.

The container main body 2 has a structure in which a resin-made bottom member 8 is attached to the bottom part 2b. The bottom member 8 is formed into a cylindrical shape with a bottom as a whole, and is attached in a state where the lower end side of the trunk part 2c is covered from the bottom part 2b of the container main body 2.

Note that with the capped container 100 of the present embodiment, the container main body 2 has a substantially cylindrical external shape as a whole, the external shape of the container main body 2 is not limited to any particular shape, and can be modified in size and design. Furthermore, the outer peripheral surface of the container main body 2 may be painted or printed.

The cap unit 1A of the present embodiment constitutes a plug body that plugs the upper opening part 2a of the container main body 2. Specifically, the cap unit 1A includes a cap main body 9 that is attached to the container main body 2 by screwing in a state in which the upper opening part 2a of the container main body 2 is covered.

The cap main body 9 has an outer lid 10 that covers the upper opening part 2a of the container main body 2 and an inner plug 11 that is fitted inside the container body 2 from the upper opening part 2a.

The outer lid 10 is made of, for example, a heat-resistant resin. The outer lid 10 has an outer circumferential wall part 10a formed in an approximately cylindrical shape so as to be contiguous with the trunk part 2c of the container main body 2, a top wall part 10b that closes the upper part of the outer circumferential wall part 10a, and an inner circumferential wall part 10c that is formed descending from the lower surface of the top wall part 10b (outer lid 10). In the present embodiment, the inner circumferential wall part 10c has a configuration that descends in a substantially cylindrical shape from the lower surface center part of the top wall part 10b (outer lid 10).

A handle part 12 is integrally provided on the upper part of the top wall part 10b. In other words, the capped container 100 with the cap unit 1A can be carried while holding the handle part 12. The shape of the handle part 12 is not particularly limited. For example, the handle part 12 in the present embodiment has an arch shape that rises upward from the upper surface of the top wall part 10b and is connected in the radial direction.

In addition, a ring member 13 serving as an anti-slip measure is detachably provided on the outer peripheral surface of the outer circumferential wall part 10a. The ring member 13 is made of an elastic member such as a heat-resistant rubber such as silicone rubber, elastomer, or the like. The ring member 13 is fitted into a ring-shaped recessed part 10d provided around the entire outer peripheral surface of the outer circumferential wall part 10a, and is provided contiguous with the outer circumferential surface of the outer circumferential wall part 10a.

The inner plug 11 is made of, for example, a heat-resistant resin. The inner plug 11 has a substantially circular bottom wall part 11a and a substantially cylindrical circumferential wall part 11b rising up from the outer periphery of the bottom wall part 11a. The center of the inner plug 11 is aligned with the center axis C together with the outer lid 10, and the upper end part of the circumferential wall part 11b is butted against the center part of the lower surface of the top wall part 10b, and the two are integrally joined using a welding method such as ultrasonic welding, high-frequency welding, and the like. As a result, the inner plug 11 is positioned at the inner center part of the outer lid 10 with the center axis C aligned. Note that the inside of the inner plug 11 is not limited to air as an insulating layer, and may be configured with an insulating material (not depicted) provided therein.

Furthermore, the outer peripheral surface of the inner plug 11 has a male threaded part 14. In the capped container 100, the cap main body 9 (cap unit 1A) is detachably attached to the container main body 2 by screwing the male threaded part 14 into the female threaded part 6.

Furthermore, the male threaded part 14 and the female threaded part 6 are mutually complementary. When using double start threads, the cap main body 9 (cap unit 1A) can be attached to and detached from the container main body 2 with a smaller number of rotational operations (approximately 180° in the present embodiment).

Watertight packing 15 is detachably attached to the lower end part of the inner plug 11. The watertight packing 15 is a ring-shaped sealing member that seals the gap between the inside of the container main body 2 and the inner plug 11 (cap main body 9), and is made of an elastic material such as a heat-resistant rubber like silicone rubber or an elastomer.

On the other hand, a flange part 11c is provided on the lower end side of the bottom wall part 11a so as to protrude in the radially expanding direction. The watertight packing 15 is fitted around the entire periphery of the flange part 11c.

Furthermore, two elastic flange parts 15a are provided on the outer peripheral surface of the watertight packing 15, protruding along the entire circumference in the radial outward direction. When the cap main body 9 is attached to the container main body 2 by screwing, the watertight packing 15 comes into close contact with the protruding part 7 of the container main body 2 over the entire periphery, while the elastic flange part 15a is elastically deformed. Thereby sealing (to stop water) can be achieved between the protruding part 7 (container main body 2) and the inner plug 11 (cap main body 9).

On the other hand, the watertight packing 15 can be removed from the flange part 11c by elastically deforming (pulling and stretching) the watertight packing 15 itself. Thereby the cap main body 9 and the watertight packing 15 can be cleaned separately, and the watertight packing 15 and the flange part 11c can be kept sanitary.

Note that the watertight packing 15 is not necessarily limited to the shape described above. For example, the number of elastic flange parts 15a is not limited to two as described above, but can be one or a plurality. Furthermore, the watertight packing 15 is not necessarily limited to the configuration in which the elastic flange part 15a is provided as described above, and the shape and the like thereof can be modified as necessary. Furthermore, the watertight packing 15 may be molded integrally with the inner plug 11.

In the capped container 100 of the present embodiment having the aforementioned configuration, the inner plug 11 is fitted into the container main body 2 from the upper opening part 2a, and then the outer lid 10 (cap main body 9) can be rotated clockwise (hereinafter referred to as the "closing direction") when viewed from above, relative to the container main body 2, thereby attaching the cap unit 1A to the container main body 2 by screwing the female threaded part 6 and the male threaded part 14 together.

On the other hand, when the cap main body 9 (cap unit 1A) is attached to the container main body 2, the outer lid 10 (cap main body 9) can be rotated counterclockwise when viewed from above (hereinafter referred to as the "opening direction") relative to the container main body 2 to release the screw engagement between the female threaded part 6 and the male threaded part 14, and thus the cap unit 1A can be removed from the container main body 2.

Incidentally, the cap unit 1A of the present embodiment has a temporary fastening mechanism 20A that temporarily fastens the inner plug 11 to the inner lower surface of the outer lid 10. The cap unit 1A of the present embodiment has a structure in which the inner plug 11 is integrally joined to the inner lower surface of the outer lid 10 by welding, while the inner plug 11 is temporarily fastened in place by the temporary fastening mechanism 20A to prevent falling from the outer lid 10.

Specifically, as depicted in FIG. 4 to FIG. 6, the temporary fastening mechanism 20A has an engaging part 21 provided on either the outer lid 10 or the inner plug 11 (in the present embodiment, the inner plug 11), and an engaged part 22 provided on the other (in the present embodiment, the outer lid 10).

The engaging part 21 is composed of a pair of protruding parts 21a provided at positions facing each other on the inner peripheral surface of the circumferential wall part 11b. The pair of protruding parts 21a are provided so as to protrude inwardly from opposing positions on the inner peripheral surface of the circumferential wall part 11b in a rotated U-shape (approximately a C-shape) toward the inside of the circumferential wall part 11b.

On the other hand, the engaged part 22 includes a pair of slits 22a provided in the inner circumferential wall part 10c of the outer lid 10 at positions facing each other. The pair of slits 22a include a horizontal slit part 22b which is open at one end side in the horizontal direction and cut toward the other end side in the horizontal direction, and a vertical slit part 22c which is cut upward from the other end side of the horizontal slit part 22b.

In addition, the engaged part 22 is provided with a pair of arm parts 10f extending horizontally in a hook shape toward the other end side so as to form a lower side of the horizontal slit part 22b, and a pair of engagement protruding parts 10g rising upward (toward the inside of the horizontal slit part 22b) from the upper surface side of the pair of arm parts 10f at one end side of the width of the vertical slit part 22c.

In addition, the engaged part 22 is provided with a pair of other end side wall parts 22d extending in the vertical direction from the rear of the other end side of the horizontal slit part 22b to form a vertical slit part 22c, and a pair of one end side wall parts 22e extending in the vertical direction from one end side of the pair of other end side wall parts 22d to form the vertical slit part 22c.

Furthermore, the inner peripheral surface of the circumferential wall part 11b of the inner plug 11 is provided with a pair of rib walls 23 extending in the vertical direction like long plates. The pair of rib walls 23 are provided so as to protrude inwardly from opposing positions on the inner peripheral surface of the circumferential wall part 11b to the inside of the circumferential wall part 1b. The pair of protruding parts 21a and the pair of rib walls 23 are provided at positions where the diagonal directions intersect on the inner peripheral surface of the circumferential wall part 11b.

In the present embodiment, the pair of protruding parts 21a and the pair of rib walls 23 are provided at positions on the inner peripheral surface of the circumferential wall part 11b such that the diagonal directions are substantially perpendicular to each other. In other words, the protruding parts 21a and the rib walls 23 are alternately provided at approximately 90° intervals in the circumferential direction of the circumferential wall part 11b.

On the other hand, the inner circumferential wall part 10c of the outer lid 10 is provided with a pair of horizontal lower end parts 24 located circumferentially between the pair of slits 22a and extending horizontally in the circumferential direction from one end side to the other end side corresponding to the vertical length of the pair of rib walls 23, as depicted in FIG. 7(a) and (b), a pair of vertical cutout parts 25 cut upward from the other end side of the pair of horizontal lower end parts 24 to the lower surface of the top wall part 10b corresponding to the circumferential thickness of the pair of rib walls 23, and a pair of abutment wall parts 10e provided extending downward along the wall surface on the other end side of the vertical cutout parts 25.

Furthermore, an engagement groove 26 is provided at the upper end of the circumferential wall part 11b of the inner plug 11, which is recessed downward in the shape of a circular ring around the entire circumference. On the other hand, a circular ring-shaped engagement protrusion 27a that is convex downward is provided along the outer periphery of the inner circumferential wall part 10c on the inner lower surface of the outer lid 10 (top wall part 10b). The engagement protrusion 27a is engaged with the engagement groove 26.

Furthermore, a pair of grooves 27b are provided on the inner and outer circumferential sides sandwiching the engagement protruding part 27a, so as to cut the lower surface of the inner side (top wall part 10b) of the outer lid 10 upward in a circular ring shape to the lower surface of the top wall part 10b. As a result, the upper end of the circumferential wall part 11b of the inner plug 11 is engaged with the pair of grooves 27b while the engagement protrusion 27a is engaged with the engagement groove 26.

The inner plug 11 is rotated circumferentially around the axis relative to the inner lower surface of the outer lid 10 in the temporary fastening mechanism 20A, whereby the engaging part 21 engages with the engaged part 22, and the inner plug 11 is temporarily fastened to the inner lower surface of the outer lid 10 to prevent falling of the inner plug.

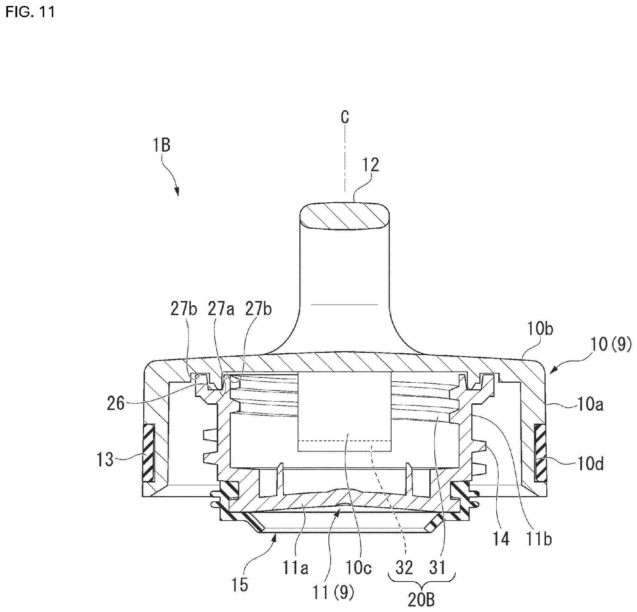

Specifically, first, as depicted by the arrows in FIG. 7(a) and (b), a pair of protruding parts 21a are engaged with the horizontal slit parts 22b of the pair of slits 22a, while the inner plug 11 is rotated around the axis relative to the inner lower surface of the outer lid 10, as depicted in FIG. 10 and 11. At this time, the inner plug 11 rotates with the other end side in the circumferential direction of the pair of protruding parts 21a (the left closed side of the C-shape) as the leading side.

As a result, the pair of protruding parts 21a engaged with the pair of slits 22a are guided from one end side to the other end side of each horizontal slit part 22b, and the protruding part 21a of the inner plug 11 is engaged with the horizontal slit part 22b (arm part 10f) formed on the inner lower surface of the outer lid 10, resulting in a temporary fastened state to prevent falling.

Note that the lower corner part 21b on the other end side of the pair of protruding parts 21a is rounded so that the corner part would have a large R shape, and could be easily guided into the horizontal slit part 22b.

Similarly, as depicted by the arrows in FIG. 7(a) and (b), when the inner plug 11 is rotated about the axis relative to the inner lower surface of the outer lid 10 from a state in which the pair of rib walls 23 are positioned on one end side of the horizontal lower end 24, the pair of rib walls 23 move to the other end side of the horizontal lower end 24, and the pair of rib walls 23 come into contact with the pair of abutment wall parts 10e, as depicted in FIG. 8(a) and (b).

As a result, the inner plug 11 cannot rotate any further relative to the outer lid 10, and the pair of abutment wall parts 10e and the pair of rib wall parts 23 function as a rotation stopper (positioning).

Furthermore, as depicted in FIG. 8(a) and (b), the position where the pair of rib walls 23 abuts against the pair of abutment wall parts 10e corresponds to the position where the pair of protruding parts 21a are guided to the rear of the other end side of the horizontal slit part 22b. For this reason, in the present embodiment, the pair of abutment wall parts 10e and the pair of rib walls 23 act as anti-rotation devices, but a configuration that provides anti-rotation by abutment between the other end sides of the pair of protruding parts 21a and the pair of other end side wall parts 22d is also possible.

In addition, the temporary fastening mechanism 20A of the present embodiment is configured such that the pair of protruding parts 21a of the inner plug 11 can engage with the horizontal slit part 22b (arm part 10f) formed on the inner lower surface of the outer lid 10 by rotating the inner plug 11 counterclockwise when viewed from above relative to the inner lower surface of the outer lid 10 so as to prevent falling and provide temporary fastening.

When attaching the cap main body 9 to the container main body 2, the outer lid 10 is rotated clockwise when viewed from above as the closing direction, so that a force is applied between the outer lid 10 and the inner plug 11 in a direction in which a pair of abutment wall parts 10e abut against the pair of rib walls 23, or a pair of other end side wall parts 22d abut against the other end sides of the pair of protruding parts 21a (pressed against each other).

Therefore, even if the inner plug 11 is separated from the outer lid 10 as described below, the cap unit 1A can be attached to the container main body 2. Conversely, if there is desire to stably remove the cap unit 1A from the container main body 2 when the connection between the outer lid 10 and the inner plug 11 is impaired, the inner plug 11 can be temporarily fastened to the inner lower surface of the outer lid 10 by rotating the inner plug 11 clockwise when viewed from above relative to the inner lower surface of the outer lid 10.

Next, as depicted by the arrows in FIG. 8(a) and (b), while the pair of protruding parts 21a of the inner plug 11 are temporarily fastened to the horizontal slit part 22b (arm part 10f) formed on the inner lower surface of the outer lid 10, the inner plug 11 is moved upward against the inner lower surface of the outer lid 10, as depicted in FIG. 9(a), (b) and FIG. 10.

As a result, the pair of protruding parts 21a engaged with the pair of slits 22a are guided upwardly of the vertical slits 22c, and the pair of rib walls 23 are engaged with a pair of vertical cutout parts 25.

In other words, the vertical slit part 22c forms a gap for moving the protruding part 21a of the inner plug 11 upward (in the direction of joining) relative to the inner lower surface of the outer lid 10 in the positional relationship between the engaged part 22 and the engaging part 21 when the engaging part 21 is engaged with the engaged part 22.

Furthermore, with the engaging projection 27a engaged with the engagement groove 26 over the entire circumference, the upper end of the circumferential wall part 11b of the inner plug 11 is engaged with the pair of groove parts 27b over the entire circumference. In this state, the upper end side of the circumferential wall part 11b of the inner plug 11 can be joined to the inner lower surface of the outer lid 10.

In the present embodiment, the engagement groove 26 of the inner plug 11 and the engagement protrusion 27a of the outer lid 10 are joined together. However, the joint may be between the upper end of the circumferential wall part 11b of the inner plug 11 and the pair of groove parts 27b. Furthermore, the bonding conditions can be appropriately changed.

In addition, in the temporary fastening mechanism 20A of the present embodiment, as depicted in FIG. 9(a), (b) and 10, when the pair of protruding parts 21a is engaged with the vertical slit part 22c, the other end side of the pair of protruding parts 21a faces the other end side wall part 22d and one end side (the right open side of the C-shape) faces the one end side wall part 22e.

When the inner lower surface of the outer lid 10 and the inner plug 11 are joined together, due to the nature of the joint, either the other end side or the one end side of the pair of protruding parts 21a are often positioned to abut with each other.
Therefore, when attaching and detaching the cap main body 9 (cap unit 1A) to the container main body 2, if the other end side of the pair of protruding parts 21a abuts the other end side wall part 22d, stress in the direction of separation can be prevented from being applied to the joint surface between the inner lower surface of the outer lid 10 and the inner plug 11, due to the circumferential force caused by rotation in the closing direction.

Conversely, when one end side of the pair of protruding parts 21a abuts against the one end side wall part 22e, stress in the direction of separation can be prevented from being applied to the joint surface between the inner lower surface of the outer lid 10 and the inner plug 11 due to the circumferential force caused by rotation in the opening direction. Thereby, the outer lid 10 and the inner plug 11 can be prevented from separating from each other.

Note that the temporarily fastened state in the present embodiment includes not only a state in which the pair of protruding parts 21a of the inner plug 11 are engaged (placed) with respect to the horizontal slit part 22b (arm part 10f) formed on the inner lower surface of the outer lid 10 as depicted in FIG. 8(a) and (b), but also a state in which the inner plug 11 is moved upward with the engaging part 21 engaged with the engaged part 22 as depicted in FIG. 9(a) and (b).

In other words, if the inner plug 11 falls from the position depicted in FIG. 9(a) and (b), gravity will move the inner plug 11 downward to the position depicted in FIG. 8(a) and (b), and as a result, the protruding part 21a of the inner plug 11 will engage with the horizontal slit part 22b (arm part 10f) formed on the inner lower surface of the outer lid 10. Therefore, the temporarily fastened state in the present embodiment refers to a state in which the inner plug 11 is prevented from falling due to gravity.

In the cap unit 1A of the present embodiment having the aforementioned configuration, the inner plug 11 is joined integrally to the inner lower surface of the outer lid 10 while being temporarily fastened by the aforementioned temporary fastening mechanism 20A to prevent the inner plug 11 from falling from the outer lid 10.

With this configuration, even if the inner plug 11 separates from the inner lower surface of the outer lid 10 due to malfunction of the joint or the like, the inner plug 11 is temporarily fastened to the outer lid 10 by the aforementioned temporary fastening mechanism 20A, so the inner plug 11 can be prevented from falling from the inner lower surface of the outer lid 10.

In particular, in the cap unit 1A of the present embodiment, the cap main body 9 is configured to be freely attached and detached to the container main body 2 by screwing while the handle part 12 is gripped, so stress is easily applied to the joint surface between the inner lower surface of the outer lid 10 and the inner plug 11 when the cap main body 9 (cap unit 1A) is repeatedly attached and detached to the container main body 2.

In contrast, in the cap unit 1A of the present embodiment, even if the inner plug 11 separates from the inner lower surface of the outer lid 10, the inner plug 11 is temporarily fastened to the outer lid 10 by the aforementioned temporary fastening mechanism 20A, thereby preventing the inner plug 11 and container main body 2 from falling from the inner lower surface of the outer lid 10, and thus the cap unit 1A can be used more safely.

In addition, the pair of engagement protruding parts 10g are provided on the horizontal slit part 22b (arm part 10f) of the outer lid 10, so even if the inner plug 11 is separated from the inner lower surface of the outer lid 10, the lower end part on one end side of the pair of protruding parts 21a of the inner plug 11 is circumferentially engaged with the pair of engagement protruding parts 10g.

Therefore, the inner plug 11 and the container main body 2 can be prevented from falling from the outer lid 10 by preventing the inner plug 11 from being rotated in the direction opposite to the arrow in FIG. 7(a) and (b) relative to the outer lid 10 and maintaining the inner plug 11 in a temporarily fastened state to the outer lid 10.

In addition, in the cap unit 1A of the present embodiment, when the inner plug 11 is integrally joined to the inner lower surface of the outer lid 10, the pair of protruding parts 21a are engaged with the pair of slits 22a, and the pair of rib walls 23 are engaged with the pair of vertical cutout parts 25.

With this configuration, when attaching and removing the cap main body 9 (cap unit 1A) from the container main body 2, a pair of rib walls 23 are circumferentially engaged with the pair of vertical cutout parts 25, thereby preventing the circumferential force caused by rotation from applying stress in a direction that would cause separation at the joint surface between the inner lower surface of the outer lid 10 and the inner plug 11, thereby preventing separation of the outer lid 10 and the inner plug 11.

Note that in the cap unit 1A of the present embodiment, the temporary fastening mechanism 20A can only be seen from the outside during a stage before the inner plug 11 is joined to the inner lower surface of the outer lid 10, in other words during the manufacturing process, or when the cap main body 9 is damaged.

Therefore, when a user uses the cap unit 1A, the temporary fastening mechanism 20A cannot be seen from the outside, so the aesthetic appearance of the product is not affected, so the user will not be aware of the structure or existence of the temporary fastening mechanism 20A. Therefore, a safer product can be provided, and users can use this product without feeling any difference from previous products.

As described above, the capped container 100 of the present embodiment is provided with the cap unit 1A of the present embodiment described above, thereby achieving greater safety and improved ease of use.

### Embodiment 2

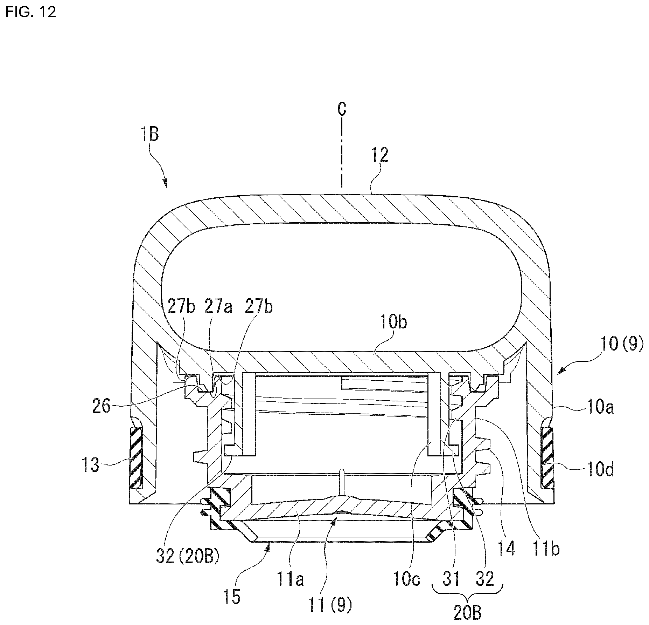

Next, Embodiment 2 of the present invention describes, for example, the cap unit 1B depicted in FIG. 11 and FIG. 12.

Note that FIG. 11 is a cross-sectional view of the cap unit 1B taken along line A-A in FIG. 1. FIG. 12 is a cross-sectional view of the cap unit 1B taken along line B-B in FIG. 1.
Furthermore, in the following description, the same parts equivalent to the above cap unit 1A shall be omitted and the same symbols shall be used in the drawings.

As depicted in FIGS. 11 and 12, the cap unit 1B of the present embodiment has basically the same configuration as the cap unit 1A, except for including a temporary fastening mechanism 20B instead of the temporary fastening mechanism 20A.

Specifically, the temporary fastening mechanism 20B has a female screw part 31 provided on the inner plug 11 and serving as an engaging part, and a male screw part 32 provided on the outer lid 10 and serving as an engaged part.

The male threaded part 32 is provided so as to protrude outward from the lower end side of the outer peripheral surface of the inner circumferential wall part 10c. On the other hand, the female screw part 31 is provided so as to protrude inward from the upper end side of the inner circumferential surface of the circumferential wall part 11b.

In the temporary fastening mechanism 20B, the female screw part 31 and the male screw part 32 are screwed together by rotating the inner plug 11 about the axis relative to the inner lower surface of the outer lid 10. Furthermore, there is no anti-rotation mechanism at the end of the screw thread, so the female threaded part 31 and the male threaded part 32 will eventually pass the end of the threads, releasing the screw threads, by further rotating the inner plug 11, and thus the inner plug 11 will move downward due to gravity.

Furthermore, unless a special operation is performed such as pressing the female threaded part 31 of the inner plug 11 downward against the male threaded part 32 provided on the inner lower surface of the outer lid 10 while rotating in the opposite direction to the rotation during installation described above, the male threaded part 32 will be irreversibly positioned more inside the inner plug 11 than the female threaded part 31, and the female threaded part 31, which is the engaging part, will be engaged with the male threaded part 32, which is the engaged part.

Thereby, the inner plug 11 is temporarily fastened to the inner lower surface of the outer lid 10 so as to prevent the inner plug 11 from falling. In addition, while the inner plug 11 is in a temporarily fastened state, the inner plug 11 can be moved upward relative to the inner lower surface of the outer lid 10, and then the inner plug 11 can be joined to the inner lower surface of the outer lid 10 to form a single unit.

In other words, in this temporary fastening mechanism 20B, when the aforementioned female threaded part 31 and male threaded part 32 are screwed so as to override the threads (screwing is released), the positional relationship between the female threaded part 31 and the male threaded part 32 provides a gap to move the inner plug 11 upward (in the direction of joining) relative to the inner lower surface of the outer lid 10.

Note that the temporarily fastened state of the present embodiment includes not only the state in which the female threaded part 31, which is the engaging part, is engaged with the male threaded part 32, which is the engaged part, as in embodiment 1, but also a state in which the inner plug 11 has moved upward while the female threaded part 31, which is the engaging part, is engaged with the male threaded part 32, which is the engaged part, as depicted in FIG. 11 and 12.

In other words, if the inner plug 11 falls from the position depicted in FIG. 11 and 12, gravity will cause the inner plug 11 to move downward, resulting in the inner plug 11 engaging with the inner lower surface of the outer lid 10 (male threaded part 32). Therefore, the temporarily fastened state in the present embodiment refers to a state in which the inner plug 11 is prevented from falling due to gravity.

In the cap unit 1B of the present embodiment having the aforementioned configuration, the inner plug 11 is integrally joined to the inner lower surface of the outer lid 10 while being temporarily fastened by the aforementioned temporary fastening mechanism 20B to prevent the inner plug 11 from falling from the outer lid 10.

Therefore, in the cap unit 1B of the present embodiment, even if the inner plug 11 separates from the inner lower surface of the outer lid 10 due to a joining defect or the like, the inner plug 11 and the container main body 2 are temporarily fastened to the outer lid 10 by the aforementioned temporary fastening mechanism 20B, so the inner plug 11 can be prevented from falling from the inner lower surface of the outer lid 10, thereby providing a safer product.

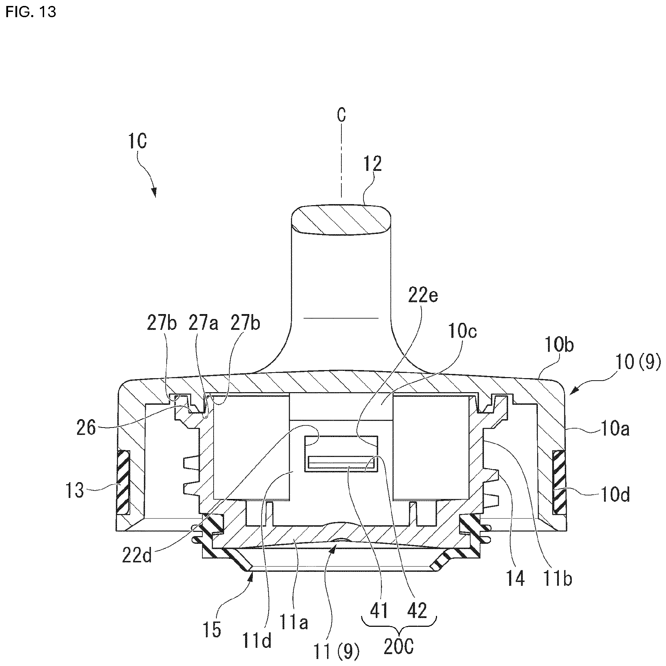

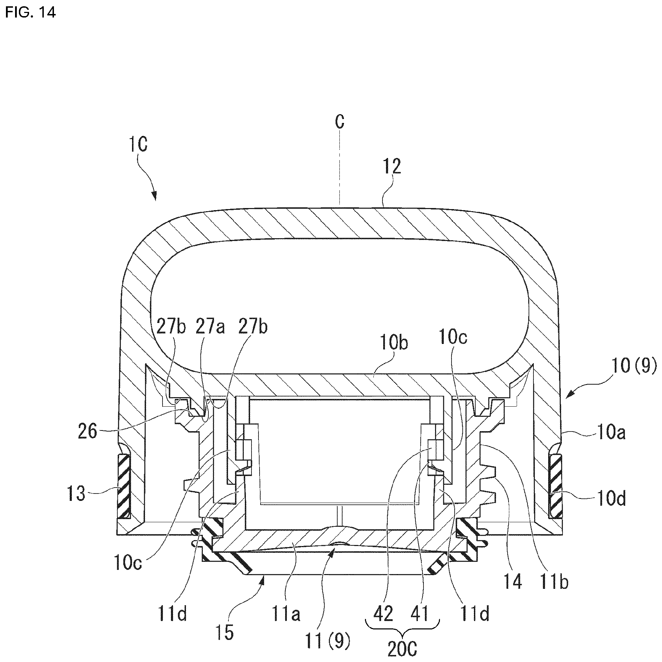

Next, Embodiment 3 of the present invention describes, for example, the cap unit 1C depicted in FIG. 13 and FIG. 14.

Note that FIG. 13 is a cross-sectional view of the cap unit 1C taken along line A-A in FIG. 1. FIG. 14 is a cross-sectional view of the cap unit 1C taken along line B-B in FIG. 1. Furthermore, in the following description, the same parts equivalent to the above cap unit 1A shall be omitted and the same symbols shall be used in the drawings.

As depicted in FIGS. 13 and 14, the cap unit 1C of the present embodiment has basically the same configuration as the cap unit 1A, except for including a temporary fastening mechanism 20C instead of the temporary fastening mechanism 20A.

Specifically, the temporary fastening mechanism 20C has a pair of engagement tabs 41 that serve as the engaged part provided on the outer lid 10, an inner lower wall part 11d that is formed rising upward in a substantially cylindrical shape from opposing positions at the center of the upper surface of the bottom wall part 11a of the inner plug 11, and a pair of engagement holes 42 that serve as the engaging part provided in the inner lower wall part 11d.

The pair of engagement tabs 41 have a constant width in the horizontal direction and a constant thickness in the vertical direction, and are provided protruding inward from opposing positions on the inner peripheral surface of the inner circumferential wall part 10c toward the inner circumferential wall part 10c. On the other hand, the pair of engagement holes 42 are provided by cutting out opposing positions of the inner circumferential lower wall part 11d in the vertical direction with a width corresponding to the engagement tab 41 and larger than the thickness of the engagement tab 41.

In addition, the pair of engagement holes 42, which serve as the engaging part, are provided with a pair of other end side wall parts 22d extending in the vertical direction from the rear of the other end side, and a pair of one end side wall parts 22e similarly extending in the vertical direction from one end side of the pair of other end side wall parts 22d.
In the present embodiment, unlike embodiment 1, a pair of other end side wall parts 22d and a pair of one end side wall parts 22e are provided on the inner plug 11 side, but the effect is the same as in embodiment 1.

In the temporary fastening mechanism 20c, the lower surfaces of the pair of engagement tabs 41 are inclined upward and inward, and are shaped to guide the engagement holes 42 upward from below. Therefore, by moving the inner plug 11 upward against the inner lower surface of the outer lid 10, the inner circumferential wall part 10c moves outward, or the inner circumferential lower wall part 11d moves inward, or both elastically deform in the aforementioned directions and then return to the original positions, resulting in a state in which the pair of engagement tabs 41 are irreversibly engaged with the pair of engagement holes 42 as a so-called snap fit.

Thereby, the inner plug 11 is temporarily fastened to the inner lower surface of the outer lid 10 so as to prevent the inner plug 11 from falling. In addition, while the inner plug 11 is in a temporarily fastened state, the inner plug 11 can be moved upward relative to the inner lower surface of the outer lid 10, and then the inner plug 11 can be joined to the inner lower surface of the outer lid 10 to form a single unit.

In other words, with this temporary fastening mechanism 20C, when a pair of engagement tabs 41 are engaged with the pair of engagement holes 42 described above, the engagement holes 42 are cut out in the vertical direction to a size larger than the thickness of the engagement tabs 41, so that a gap is formed on the upper and lower sides of each engagement hole 42 through which each engagement tab 41 can move until abutting. Therefore, the positional relationship between the engagement hole 42 and the engagement tab 41 provides a gap that allows the inner plug 11 to move upward (in the joining direction) relative to the inner lower surface of the outer lid 10.

Note that the temporarily fastened state in the present embodiment, as in embodiment 1, includes not only a state in which a pair of engagement holes 42, which are the engaging part, are engaged with a pair of engagement tabs 41, which are the engaged part, but also a state in which the inner plug 11 has moved upward while the pair of engagement holes 42, which are the engaging part, are engaged with the pair of engagement tabs 41, which are the engaged part, as depicted in FIG. 13 and 14.

In other words, if the inner plug 11 falls from the position depicted in FIG. 13 and 14, gravity will cause the inner plug 11 to move downward, resulting in the inner plug 11 engaging with the inner lower surface of the outer lid 10 (engagement tab 41). Therefore, the temporarily fastened state in the present embodiment refers to a state in which the inner plug 11 is prevented from falling due to gravity.

In the cap unit 1C of the present embodiment having the aforementioned configuration, the inner plug 11 is attached to the inner lower surface of the outer lid 10 while being temporarily fastened by the aforementioned temporary fastening mechanism 20C to prevent the inner plug 11 from falling from the outer lid 10.

Therefore, in the cap unit 1C of the present embodiment, even if the inner plug 11 separates from the inner lower surface of the outer lid 10 due to a joining defect or the like, the inner plug 11 and the container main body 2 are temporarily fastened to the outer lid 10 by the aforementioned temporary fastening mechanism 20C, so the inner plug 11 can be prevented from falling from the inner lower surface of the outer lid 10, thereby providing a safer product.

Note that the present invention is not necessarily limited to the above embodiments, and various changes can be made without departing from the purpose of the invention.
For example, the aforementioned cap units 1A, 1B, and 1C are configured so that the male threaded part 14 of the inner plug 11 is attached to the female threaded part 6 of the container main body 2 by screwing, but this is not necessarily limited to such a configuration. For example, the cap units 1A, 1B, and 1C may be configured so that a male threaded part provided on the outer peripheral surface of the opening neck part 2e (of the container main body 2) is attached by screwing to a female threaded part provided on the inner peripheral surface of the outer circumferential wall part 10a (outer lid 10).

Furthermore, the cap units 1A, 1B, and 1C are configured to be detachably attached to the opening neck part 2e of the container main body 2 by screwing, but are not necessarily limited to such a configuration. For example, a configuration is possible that is detachably attached by screwing to a shoulder member attached to the opening neck part 2e of the container main body 2.

In addition, the aforementioned cap units 1A, 1B, and 1C may have a configuration where the engaging part of the inner plug 11 and the engaged part of the outer lid 10 are interchanged. For example, the cap unit 1A has a configuration where the protruding part 21a may be provided on the outer lid 10 side, and the slit 22a may be provided on the inner plug 11 side.

Similarly, the cap unit 1B can be configured such that the female threaded part 31 may be provided on the outer lid 10 side, and the male threaded part 32 may be provided on the inner plug 11 side. Similarly, the cap unit 1C can be configured such that the engagement hole 42 may be provided on the outer lid 10 side, and the engagement tab 41 may be provided on the inner plug 11 side.

Note that the above embodiment depicts an application where the present invention is applied to a beverage container having a heat/cold insulation function provided by the container main body 2 having the aforementioned vacuum insulation structure, but the present invention can be widely applied to a capped container having a container main body and a cap unit that can be freely attached and detached to the container main body.

### DESCRIPTION OF CODES

1A, 1B, 1C: Cap unit, 2: Container main body, 2a: Upper opening part, 3: Outer container 4: Inner container, 5: Vacuum insulation layer, 6: Female threaded part, 7: Protruding part, 9: Cap main body, 10: Outer lid, 11: Inner plug, 12: Handle part, 14: Male threaded part, 15: Watertight packing, 20A, 20B, 20C: Temporary fastening mechanism, 21: Engaging part, 22: Engaged part, 31: Female threaded part (Engaging part), 32: Male threaded part (Engaged part), 41: Engagement tab (Engaged part), 42: Engaging hole (Engaging part), 100: Capped container

## Claims

1. A cap unit freely attached and detached from a container main body open on an upper part, comprising:
a cap main body that closes an upper opening part of the container main body, the cap main body having an outer lid that covers the upper opening part of the container main body, an inner plug that fits into the inside of the container main body from the upper opening part, and a temporary fastening mechanism that prevents the inner plug from falling by temporarily fastening the inner plug to an inner lower surface of the outer lid;
wherein the inner plug is integrally joined to the inner lower surface of the outer lid while the inner plug is temporarily fastened to the outer lid by the temporary fastening mechanism.

2. The cap unit according to claim 1, wherein the temporary fastening mechanism has an engaging part provided on one of the outer lid or the inner plug, and an engaged part provided on the other, and the engaging part engages with the engaged part, thereby temporarily fastening the inner plug to the inner lower surface of the outer lid.

3. The cap unit according to claim 2, wherein a positional relationship between the engaged part and the engaging part when the engaging part is engaged with the engaged part is such that a gap is provided to allow the inner plug to move in a direction for joining to the inner lower surface of the outer lid.

4. The cap unit according to claim 2, wherein the temporary fastening mechanism is in a condition where the engaging part engages with the engaged part by rotating the inner plug about an axis relative to the inner lower surface of the outer lid.

5. A capped container comprising:
the cap unit according to any one of claims 1 to 4; and
a container main body to which the cap unit is attached.
